# FASCICULE DE BREVET EUROPEEN

(11) **EP 1 123 233 B1**
(45) Date de publication et mention de la délivrance du brevet: **18.06.2003**
(21) Numéro de dépôt: 99949070.9
(22) Date de dépôt: 19.10.1999
(51) Int. Cl.: B60T 13/573, B60T 13/569

(54) **MAITRE-CYLINDRE A REACTION HYDRAULIQUE ET A EFFORT D'ENTREE ACCRU**
HAUPTBREMSZYLINDER MIT HYDRAULISCHER REAKTION UND GESTEIGERTEM EINGANGSDRUCK
HYDRAULIC REACTION MASTER CYLINDER WITH ENHANCED INPUT FORCE

(30) Priorité: 20.10.1998 FR 9813186
(43) Date de publication de la demande: 16.08.2001
(73) Titulaire: BOSCH SISTEMAS DE FRENADO, S.L., 08080 Barcelona 6 (ES)
(72) Inventeur: SIMON BACARDIT, Juan Bosch Systèmes de Freinage, F-93700 Drancy (FR)
(74) Mandataire: Hurwic, Aleksander Wiktor
(86) Numéro de dépôt international: FR9902536
(87) Numéro de publication internationale: WO00023308

(56) Documents cités:
- EP-B- 0 662 894
- WO-A-95/14597
- WO-A-96/22208
- WO-A-96/29221
- DE-A- 4 408 993
- FR-A- 2 751 602
- US-A- 5 645 145

## Description

La présente invention concerne de façon générale les systèmes de freinage hydraulique pour véhicules à moteur.

Plus précisément, la présente invention concerne un maître-cylindre à réaction hydraulique, du type de ceux qui comprennent : un corps cylindrique percé d'un alésage axial principal délimitant une chambre de travail de volume variable remplie d'un fluide de freinage; un piston principal obturant la chambre de travail et coulissant sélectivement dans l'alésage principal, depuis une position de repos et suivant une première direction axiale, pour réduire le volume de cette chambre de travail; un alésage axial secondaire percé dans le piston principal et délimitant une chambre de réaction de capacité variable, soumise à une pression variable et communiquant avec la chambre de travail; un piston de réaction obturant la chambre de réaction et coulissant sélectivement dans l'alésage secondaire, depuis une position de repos et suivant la première direction axiale, pour réduire la capacité de la chambre de réaction; un premier organe d'actionnement pour déplacer le piston principal de sa position de repos; un second organe d'actionnement pour déplacer le piston de réaction de sa position de repos; un ressort précontraint en compression, dont une extrémité amont prend appui, dans une position de repos, sur le premier organe d'actionnement et dont une extrémité aval prend appui, dans une position de repos, sur une butée solidaire du piston principal, ce ressort étant disposé dans le piston principal autour du piston de réaction; et une surface d'entraînement définie sur le piston de réaction, pour entraîner sélectivement l'extrémité aval du ressort suivant une seconde direction axiale, inverse de la première direction axiale, et augmenter corrélativement la compression du ressort.

Un maître-cylindre de ce type est bien connu dans l'art antérieur et par exemple intégré aux dispositifs de freinage décrits dans le brevet EP - 0 662 894 et dans le document de brevet FR - 2 751 602, de tels dispositifs de freinage présentant l'avantage d'optimiser l'intensité de la force de freinage en cas de coup de frein brusque.

Plus récemment, la préoccupation s'est développée, dans la conception des nouveaux systèmes de freinage, de contrôler de façon très fine la sensation ressentie à la pédale par le conducteur, de manière à standardiser au maximum cette sensation et à permettre aux conducteurs de changer de véhicule sans devoir faire un effort particulier d'adaptation-aux différents systèmes de freinage utilisés sur différents véhicules.

La présente invention se situe dans ce contexte et a pour but de proposer un maître-cylindre à réaction hydraulique de structure simple et offrant cette fonctionnalité.

A cette fin, le maître-cylindre de la présente invention, par ailleurs conforme à la définition générique qu'en donne le préambule ci-dessus, est essentiellement caractérisé en ce qu'il comprend en outre des moyens de transmission de mouvement permettant au second organe d'actionnement d'entraîner l'extrémité amont du ressort et d'augmenter corrélativement la compression du ressort lorsque ce second organe d'entraînement déplace le piston de réaction suivant la première direction axiale.

Cet agencement permet ainsi, au moyen d'un seul et même ressort, d'assurer deux fonctions distinctes, à savoir, d'une part, opposer une résistance à un mouvement du piston de réaction en sens inverse de sa direction d'actionnement, et d'autre part, opposer une résistance au déplacement, suivant la direction d'actionnement, du second organe d'actionnement par le conducteur.

Dans le mode de réalisation préféré de l'invention, les moyens de transmission de mouvement comprennent une bague coulissante, disposée dans le piston principal autour du piston de réaction et interposée entre l'extrémité amont du ressort et le premier organe d'actionnement, cette bague étant conformée pour être entraînée par le second organe d'actionnement lorsque ce second organe d'entraînement déplace le piston de réaction suivant la première direction axiale.

En outre, le ressort est, de préférence, à tout moment dans un état de compression tel que l'une au moins de ses extrémités amont et aval se trouve dans sa position de repos.

D'autres caractéristiques et avantages de l'invention ressortiront clairement de la description qui en est faite ci-après et nullement limitatif, en référence aux dessins ci-joints dans lesquels :
- la Figure 1 est une vue en coupe d'un dispositif de freinage incorporant un maître-cylindre conforme à l'invention; et
- la Figure 2 est une vue en coupe des organes spécifiques du maître-cylindre de l'invention.

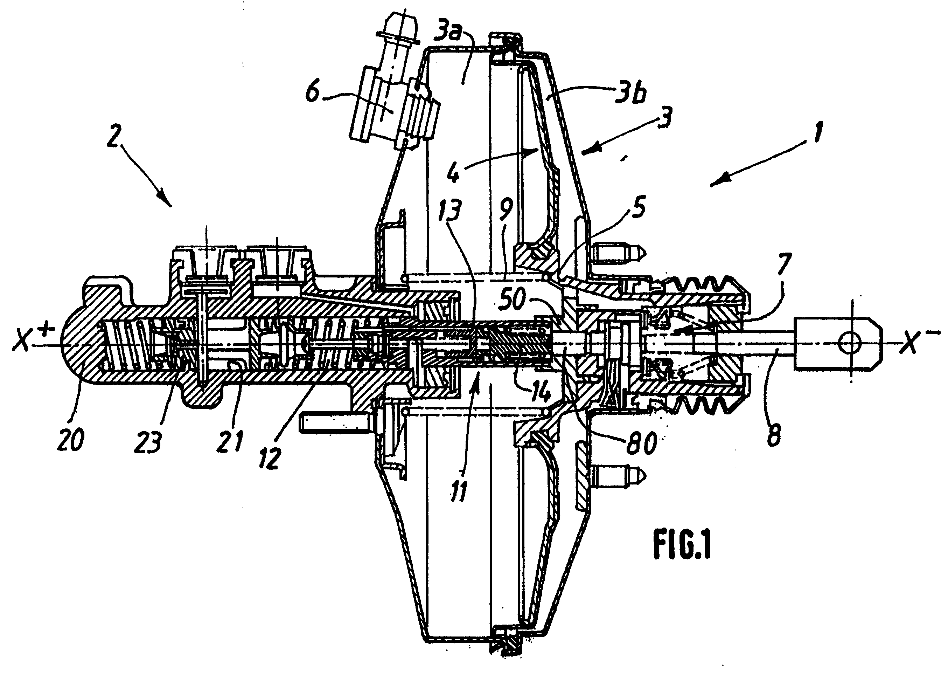

Le dispositif de freinage illustré à la figure 1, de même que celui que décrit le document de brevet antérieur FR - 2 751 602, comprend schématiquement un servomoteur pneumatique d'assistance 1 et un maître-cylindre 2.

Le maître-cylindre 2 comprend essentiellement un corps 20 percé d'un alésage axial principal 21 dans lequel coulisse un ensemble piston 11 et un piston secondaire 23.

Le servomoteur comprend lui-même une enveloppe rigide 3 séparée en deux chambres 3a et 3b, de façon étanche, par une cloison mobile 4 susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet pneumatique 7, commandé par une tige de commande 8, laquelle est reliée à une pédale de frein (non représentée).

Lorsque la tige de commande 8 est en position de repos, en l'occurrence tirée vers la droite comme illustré sur la figure 1, le clapet pneumatique 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet pneumatique 7 de façon qu'il isole l'une de l'autre les chambres 3a et 3b puis, dans un deuxième temps, de déplacer ce clapet pneumatique de façon qu'il ouvre la chambre arrière 3b à la pression atmosphérique.

La différence de pression entre les deux chambres alors ressentie par la cloison mobile 4 exerce sur cette dernière une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant la direction axiale X-X+ de la tige de poussée 8 en direction du maître-cylindre 2, et se conjuguent pour constituer la force d'actionnement de ce dernier.

Plus précisément, la force d'actionnement est appliquée sur l'ensemble piston 11 du maître-cylindre et en provoque globalement le déplacement vers la gauche (sur la figure 1) suivant la direction axiale X-X+, ce qui entraîne une élévation de pression du liquide de freinage présent dans la chambre de travail 12 du maître-cylindre, et un actionnement du frein relié à cette dernière.

L'ensemble piston 11 est en fait composite et comprend un piston principal 13 percé d'un alésage axial 130 fermé de façon étanche par un piston de réaction 14.

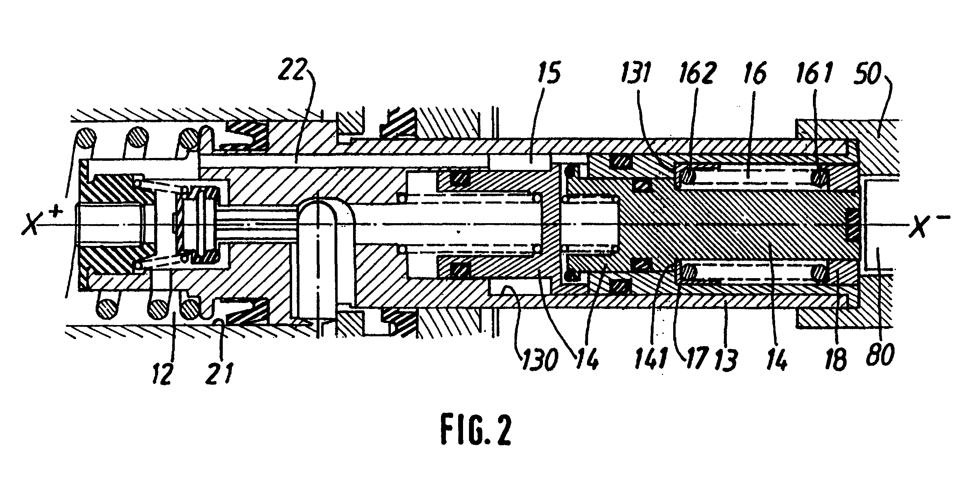

La chambre de travail 12 est délimitée, dans l'alésage 21 du corps 20, par le piston principal 13 qui est susceptible d'y coulisser de façon étanche, depuis sa position de repos illustrée sur les figures 1 et 2 et suivant la direction d'actionnement X-X+ axiale, afin de réduire le volume de cette chambre de travail et d'augmenter la pression hydraulique qui y règne.

Le coulissement du piston principal 13 est obtenu par le déplacement d'un poussoir annulaire 50, qui est en appui sur le piston principal 13 et qui est mû lui-même par le piston pneumatique 5.

Le piston de réaction 14 délimite, dans l'alésage 130 du piston principal 13, une chambre de réaction 15 de capacité variable qui communique avec la chambre de travail 12 au moins à travers un canal 22.

Le piston de réaction 14 est monté coulissant de façon étanche dans l'alésage 130 du piston principal 13, depuis sa position de repos illustrée sur les figures 1 et 2 et suivant la direction d'actionnement X-X+ axiale, afin de pouvoir réduire la capacité de cette chambre de réaction.

Le coulissement du piston de réaction 14 est obtenu par le déplacement d'un plongeur 80, qui est mû lui-même par la tige de commande 8.

Un ressort 16, précontraint en compression, est disposé dans le piston principal 13 autour du piston de réaction 14, une extrémité amont 161 de ce ressort 16 prenant appui, en position de repos, sur le poussoir 50, et une extrémité aval 162 de ce ressort 16 prenant appui, en position de repos, sur une butée 131 solidaire du piston principal.

Le piston de réaction 14 présente en outre une surface d'entraînement 141 permettant à ce piston de réaction d'entraîner, éventuellement par l'intermédiaire d'une rondelle 17, l'extrémité aval 162 du ressort suivant une direction axiale X+X-, inverse de la direction d'actionnement X-X+, et d'augmenter corrélativement la compression du ressort 16, lorsqu'un accroissement brutal de la pression hydraulique dans la chambre de réaction 15 repousse le piston de réaction 14 dans cette direction inverse X+X-.

Le maître-cylindre de l'invention se distingue de ces caractéristiques connues par le fait qu'il comporte des moyens permettant au plongeur 80 d'entraîner l'extrémité amont 161 du ressort 16 et d'augmenter corrélativement la compression de ce ressort, lorsque le plongeur 80 déplace le piston de réaction 14 suivant la direction d'actionnement X-X+.

Dans le mode de réalisation illustré à la figure 2, ces moyens consistent plus précisément en une bague coulissante 18, disposée dans le piston principal 13 autour du piston de réaction 14 et interposée entre l'extrémité amont 161 du ressort 16 et le poussoir 50, cette bague 18 étant conformée pour être entraînée par le plongeur 80 lorsque ce dernier déplace le piston de réaction 14 suivant la direction d'actionnement X-X+.

En outre, le ressort 16 est de préférence à tout moment dans un état de compression tel que l'une au moins de ses extrémités amont 161 et aval 162 se trouve dans sa position de repos.

## Revendications

1. Maître-cylindre à réaction hydraulique, comprenant : un corps cylindrique (20) percé d'un alésage axial principal (21) délimitant une chambre de travail (12) de volume variable remplie d'un fluide de freinage; un piston principal (13) obturant la chambre de travail (12) et coulissant sélectivement dans l'alésage principal (21), depuis une position de repos et suivant une première direction axiale (X-X+), pour réduire le volume de cette chambre de travail; un alésage axial secondaire (130) percé dans le piston principal (13) et délimitant une chambre de réaction (15) de capacité variable, soumise à une pression variable et communiquant avec la chambre de travail (12); un piston de réaction (14) obturant la chambre de réaction (15) et coulissant sélectivement dans l'alésage secondaire (130), depuis une position de repos et suivant la première direction axiale (X-X+), pour réduire la capacité de la chambre de réaction (15); un premier organe d'actionnement (50) pour déplacer le piston principal (13) de sa position de repos; un second organe d'actionnement (80) pour déplacer le piston de réaction (14) de sa position de repos; un ressort (16) précontraint en compression, dont une extrémité amont (161) prend appui, dans une position de repos, sur le premier organe d'actionnement (50) et dont une extrémité aval (162) prend appui, dans une position de repos, sur une butée (131) solidaire du piston principal (13), ce ressort (16) étant disposé dans le piston principal (13) autour du piston de réaction (14); et une surface d'entraînement (141) définie sur le piston de réaction (14), pour entraîner sélectivement l'extrémité aval (162) du ressort (16) suivant une seconde direction axiale (X+X-), inverse de la première direction axiale (X-X+), et augmenter corrélativement la compression du ressort (16), **caractérisé en ce qu'**il comprend en outre des moyens de transmission de mouvement (18) permettant au second organe d'actionnement (80) d'entraîner l'extrémité amont (161) du ressort (16) et d'augmenter corrélativement la compression du ressort (16) lorsque ce second organe d'entraînement (80) déplace le piston de réaction (14) suivant la première direction axiale (X-X+).

2. Maître-cylindre suivant la revendication 1, **caractérisé en ce que** les moyens de transmission de mouvement comprennent une bague coulissante (18), disposée dans le piston principal (13) autour du piston de réaction (14) et interposée entre l'extrémité amont (161) du ressort (16) et le premier organe d'actionnement (50), cette bague (18) étant conformée pour être entraînée par le second organe d'actionnement (80) lorsque ce second organe d'entraînement (80) déplace le piston de réaction (14) suivant la première direction axiale (X-X+).

3. Maître-cylindre suivant la revendication 1 ou 2, **caractérisé en ce que** le ressort (16) est à tout moment dans un état de compression tel que l'une au moins de ses extrémités amont (161) et aval (162) se trouve dans sa position de repos.

## Claims

1. Master cylinder with hydraulic reaction comprising: a cylindrical body (20) pierced with a main axial bore (21) delimiting a variable-volume working chamber (12) filled with brake fluid; a main piston (13) closing the working chamber (12) and sliding selectively in the main bore (21) from a position of rest and in a first axial direction (X-X+) to reduce the volume of this working chamber; a secondary axial bore (130) pierced in the main piston (13) and delimiting a variable-capacity reaction chamber (15) subjected to a variable pressure and communicating with the working chamber (12); a reaction piston (14) closing the reaction chamber (15) and sliding selectively in the secondary bore (130) from a position of rest and in the first axial direction (X-X+) to reduce the capacity of the reaction chamber (15); a first actuating member (50) for displacing the main piston (13) from its position of rest; a second actuating member (80) for displacing the reaction piston (14) from its position of rest; a spring (16) that is preloaded in compression, an upstream end (161) of which rests, in the position of rest, on the first actuating member (50) and a downstream end (162) of which rests, in a position of rest, on a stop (131) integral with the main piston (13), this spring (16) being arranged in the main piston (13) around the reaction piston (14); and a drive surface (141) defined on the reaction piston (14) for selectively driving the downstream end (162) of the spring (16) in a second axial direction (X+X-) that is the opposite of the first axial direction (X-X+) and correspondingly increasing the compression of the spring (16), **characterized in that** it further comprises movement-transmission means (18) allowing the second actuating member (80) to drive the upstream end (161) of the spring (16) along end correspondingly increase the compression of the spring (16) when this second drive member (80) displaces the reaction piston (14) in the first axial direction (X-X+).

2. Master cylinder according to Claim 1, **characterized in that** the movement-transmission means comprise a sliding ring (18) arranged in the main piston (13) around the reaction piston (14) and inserted between the upstream end (161) of the spring (16) and the first actuating member (80), this ring (18) being shaped to be driven along by the second actuating member (80) when this second drive member (80) displaces the reaction piston (14) in the first axial direction (X-X+)

3. Master cylinder according to Claim 1 or 2, **characterized in that** the spring (16) is always in a state of compression such that at least one of its upstream (161) and downstream (162) ends is in its position of rest.

## Patentansprüche

1. Hauptzylinder mit hydraulischer Reaktion, welcher aufweist: einen zylindrischen Körper (20), der mit einer axialen Hauptbohrung (21) versehen ist, die eine Arbeitskammer (12) mit variablem Volumen begrenzt, welche mit einem Bremsfluid gefüllt ist; einen Hauptkolben (13), der die Arbeitskammer (12) verschließt und selektiv in der Hauptbohrung (21) aus einer Ruhestellung und in einer ersten axialen Richtung (X-X+) gleitet, um das Volumen dieser Arbeitskammer zu verringern; eine sekundäre axiale Bohrung (130), die in den Hauptkolben (13) gebohrt ist und eine Reaktionskammer (15) mit variabler Kapazität begrenzt, die einem variablen Druck ausgesetzt ist und mit der Arbeitskammer (12) in Verbindung steht; einen Reaktionskolben (14), der die Reaktionskammer (15) verschließt und selektiv in der sekundären Bohrung (130) aus einer Ruhestellung und in der ersten axialen Richtung (X-X+) gleitet, um die Kapazität der Reaktionskammer (15) zu verringern; eine erste Betätigungseinrichtung (50), um den Hauptkolben (13) aus seiner Ruhestellung zu verschieben; eine zweite Betätigungseinrichtung (80), um den Reaktionskolben (14) aus seiner Ruhestellung zu verschieben; eine Feder (16), die auf Druck vorgespannt ist und von welcher ein vorderes Ende (161) in einer Ruhestellung an der ersten Betätigungseinrichtung (50) anliegt und von welcher ein hinteres Ende (162) in einer Ruhestellung an einem Anschlag (131) anliegt, der mit dem Hauptkolben (13) fest verbunden ist, wobei diese Feder (16) im Hauptkolben (13) um den Reaktionskolben (14) angeordnet ist; und eine Mitnahmefläche (141), die am Reaktionskolben (14) definiert ist, um selektiv das hintere Ende (162) der Feder (16) in einer zweiten axialen Richtung (X+X-) mitzunehmen, die zur ersten axialen Richtung (X-X+) entgegengesetzt ist, und korrelativ den Druck der Feder (16) zu erhöhen, **dadurch gekennzeichnet, daß** er außerdem Mittel (18) zur Übertragung einer Bewegung umfaßt, die der zweiten Betätigungseinrichtung (80) ermöglichen, das vordere Ende (161) der Feder (16) mitzunehmen und korrelativ den Druck der Feder (16) zu erhöhen, wenn diese zweite Mitnahmeeinrichtung (80) den Reaktionskolben (14) in der ersten axialen Richtung (X-X+) verschiebt.

2. Hauptzylinder nach Anspruch 1, **dadurch gekennzeichnet, daß** die Mittel zur Übertragung einer Bewegung einen Gleitring (18) aufweisen, der im Hauptkolben (13) um den Reaktionskolben (14) angeordnet ist und zwischen das vordere Ende (161) der Feder (16) und die erste Betätigungseinrichtung (50) eingefügt ist, wobei dieser Ring (18) ausgebildet ist, um von der zweiten Betätigungseinrichtung (80) mitgenommen zu werden, wenn diese zweite Mitnahmeeinrichtung (80) den Reaktionskolben (14) in der ersten axialen Richtung (X-X+) verschiebt.

3. Hauptzylinder nach Anspruch 1 oder 2, **dadurch gekennzeichnet, daß** sich die Feder (16) jederzeit in einem Druckzustand befindet, so daß sich zumindest eines ihres vorderen Endes (161) und ihres hinteren Endes (162) in seiner Ruhestellung befindet.
